# FASCICULE DE BREVET EUROPEEN

(11) **EP 3 732 604 B1**
(45) Date de publication et mention de la délivrance du brevet: **30.04.2025**
(21) Numéro de dépôt: 18833682.0
(22) Date de dépôt: 21.12.2018
(51) Int. Cl.: G06F 21/57

(54) **CONTRÔLE D'INTÉGRITÉ D'UN DISPOSITIF ÉLECTRONIQUE**
PRÜFUNG DER INTEGRITÄT EINER ELEKTRONISCHEN VORRICHTUNG
CHECKING THE INTEGRITY OF AN ELECTRONIC DEVICE

(30) Priorité: 26.12.2017 FR 1771431
(43) Date de publication de la demande: 04.11.2020
(73) Titulaire: Ledger, SAS, 75002 Paris (FR)
(72) Inventeur: BACCA Nicolas, 92400 Courbevoie (FR); TOMAZ Olivier, 91400 Orsay (FR)
(74) Mandataire: Marchand, André
(86) Numéro de dépôt international: PCT/FR2018/000270
(87) Numéro de publication internationale: WO 2019/129937

(56) Documents cités:
- US-A1- 2002 023 032
- US-B2- 9 177 152

## Description

L'invention concerne le domaine du contrôle d'intégrité d'un dispositif électronique.

L'invention a plus précisément pour objet un procédé de contrôle d'intégrité d'un dispositif électronique, un tel dispositif électronique apte à mettre en œuvre ce procédé et des utilisations d'un tel dispositif électronique mettant en œuvre ce procédé. Par la suite, le dispositif électronique sera parfois dénommé par ellipse « dispositif ».

Un dispositif tel que celui de l'invention peut être un système de paiement par carte, cet exemple et cette application n'étant pas exclusifs d'autres. Par « système de paiement par carte », on entend la combinaison fonctionnelle d'un terminal de paiement et d'une carte à puce bancaire de paiement.

De façon connue, un dispositif du type de celui de l'invention comporte au moins :
- un processeur (communément dénommé MPU pour « micro-processor unit »),
- un élément sécurisé (qui peut être, en particulier, une carte à puce) apte à stocker et gérer des données et dans lequel a été chargé une clé publique destinée à vérifier une signature électronique, et
- un moyen de stockage de données (tel qu'une mémoire).

Par ailleurs, il est également connu de pouvoir authentifier au préalable le contenu d'un moyen de stockage de manière que son intégrité puisse être vérifiée par une clé publique, correspondant à la clé privée ayant servie à cette authentification. Dans le contexte de la présente invention, cette clé publique peut être celle chargée dans la mémoire de l'élément sécurisé.

Dans le contexte de l'invention, on entend par « contrôle d'intégrité » la vérification que les données n'ont pas été modifiées ou détruites de façon non autorisée, conformément à la définition donnée par la norme Iso n° 7498-2.

De façon connue, dans une phase préalable à la mise à disposition de l'utilisateur, phase qui peut être au niveau de la fabrication du dispositif en question ou de son paramétrage par un fournisseur de produits ou de services, ses éléments constitutifs peuvent être authentifiés par une autorité de certification ad hoc, gouvernementale ou privée.

Dans une phase ultérieure déployée, il importe que le dispositif puisse être toujours mis en œuvre par l'utilisateur en toute confiance, c'est-à-dire avec la garantie de la conservation de son intégrité.

Tel est le but de l'invention.

On connaît la signature électronique qui permet de garantir l'intégrité d'un document électronique ou d'une information et d'en authentifier l'auteur. Toutefois, le mécanisme de la signature électronique ne permet pas à lui seul de garantir qu'un programme ayant fourni une signature exécute de façon exacte ce qu'il prétend exécuter.

Dans les systèmes de paiement par carte bancaire, il est prévu une authentification par challenge-réponse carte bancaire / serveur d'authentification et terminal de paiement / serveur d'authentification ainsi qu'une validation que le terminal de paiement possède bien la clé privée qu'il est sensé posséder pour la carte utilisée. Mais, l'utilisateur ne peut savoir, et donc n'a aucune certitude, quant à l'identité entre la transaction qu'il réalise au moyen du terminal de paiement et la transaction réellement réalisée par le terminal de paiement. Les certifications fournies par le groupement EMVCo^{®} ou des organisations analogues n'empêchent pas l'utilisation d'un terminal de paiement contrefait ou cloné.

L'état de la technique est également illustré par les documents US 6 830 840 et US 5 721 781.

Le document US 6 839 840 décrit un procédé qui permet à une carte à mémoire et à un terminal de s'authentifier, dans lequel tous les calculs algorithmiques sont effectués par le terminal auquel la carte à mémoire est connectée. Ces opérations relatives à l'authentification sont effectuées avant le début d'une transaction proprement dite et après la fin de cette transaction en vue de l'authentification au début de la transaction suivante.

Le document US 5 721 781 décrit un procédé pour authentifier une transaction entre un dispositif d'information portable et un terminal, le dispositif d'information portable stockant un certificat lié à un dispositif unique au dispositif et le terminal mémorisant un certificat lié au terminal unique au terminal qui inclut des informations concernant un type de terminal. Le procédé comprenant les étapes suivantes: échanger les certificats liés au terminal et liés au terminal entre le dispositif d'informations portable et le terminal pendant une transaction; authentifier le dispositif d'informations portable et le terminal l'un par l'autre en utilisant les certificats liés au dispositif et au terminal échangés; déterminer, sur le dispositif d'information portable, un niveau de sécurité pour le terminal sur la base des informations de type terminal contenues dans le certificat lié au terminal reçu du terminal, le niveau de sécurité ayant une valeur limite associée pour une valeur de la transaction effectuée pendant la transaction; et restreindre la valeur de la transaction à la limite de valeur associée au niveau de sécurité déterminé.

Le document US 2002/023032 concerne un procédé pour permettre à une transaction financière d'être effectuée à l'aide d'un système électronique, consistant à interroger un terminal de transaction électronique avec un dispositif de sécurité électronique afin d'obtenir une métrique d'intégrité pour le terminal de transaction financière ; à déterminer si le terminal de transaction est un terminal de confiance sur la base de la métrique d'intégrité; à permettre aux données de transaction financière d'être entrées dans le terminal de transaction si le terminal de transaction est identifié en tant que terminal de confiance. Le document US 2002/023032 concerne également un système de transaction financière comprenant un terminal financier électronique; un dispositif de sécurité électronique ayant un moyen d'interrogation pour interroger le terminal de transaction financière électronique afin d'obtenir une métrique d'intégrité pour le terminal de transaction financière électronique, un moyen de détermination pour déterminer si le terminal de transaction est un terminal de confiance sur la base de la métrique d'intégrité, un moyen pour autoriser des données de transaction financière à entrer dans le terminal de transaction si le terminal de transaction est identifié comme un terminal de confiance. Le procédé et le système décrits dans le document US 2002/023032 ne prévient pas que la totalité de la mémoire du terminal de transaction soit soumise au hachage par l'élément sécurisé. Or, ne soumettre au hachage qu'un certificat et une somme de contrôle implique qu'ils peuvent avoir été falsifiés. Le procédé et le système décrits dans le document US 2002/023032 ne permettent pas d'ajuster le niveau de fonctionnalité de l'élément sécurisé en fonction de la métrique d'intégrité.

Le document US 9 177 152 concerne un procédé d'authentification et de déchiffrement d'un fichier programme crypté destiné à être exécuté par un élément sécurisé, qui consiste à recevoir le fichier programme et un certificat numérique associé au fichier programme à partir d'un dispositif externe. Le procédé stocke le fichier de programme et le certificat associé dans une mémoire vive sécurisée disposée dans l'élément sécurisé et hache le fichier de programme pour obtenir un hachage. La méthode authentifie le fichier de programme en comparant le hachage obtenu à une somme de contrôle stockée dans le certificat. De plus, le procédé écrit les informations de configuration d'exécution stockées dans le certificat dans les registres de configuration correspondants disposés dans l'élément sécurisé. ; le procédé génère en outre une clé de chiffrement en utilisant une valeur de départ stockée dans le certificat et un identifiant unique disposé dans l'élément sécurisé et déchiffre le fichier de programme en utilisant la clé de chiffrement générée. Le procédé selon le document US 9 177 152 ne permet pas à l'élément sécurisé de hacher un programme qui ne serait pas stockable dans sa mémoire vive sécurisée. De plus, ce document ne prévoit pas d'autoriser ou non l'exécution du programme par un autre microprocesseur.

Les procédés et systèmes décrits dans les documents US 2002/023032 et US 9 177 152 sont tels que l'élément sécurisé se voit soumettre une somme de contrôle ou un contenu complet mais relativement petit dont il vérifie l'intégrité.

Tout au contraire, dans l'esprit de l'invention, il est souhaité que ce soit l'élément sécurisé qui décide des fonctionnalités qu'il pourra remplir en fonction du résultat du contrôle d'intégrité du reste de la plateforme, ce qui implique de contrôler l'ensemble de la mémoire du reste des microprocesseurs.

Un tel souhait se heurte à deux obstacles. D'une part, le contrôle de l'intégrité d'une grande quantité d'information de manière sûre passe par le fait que le contenu doit être envoyé et haché par l'élément sécurisé, ce qui constitue un goulot d'étranglement des performances de cette opération de contrôle d'intégrité. D'autre part, le fait que l'autre microprocesseur soit encore en fonctionnement lors de la transmission du contenu intégral de sa mémoire impose de s'assurer qu'il n'a pas modifié à la volée les données transmises afin de masquer une éventuelle modification par un tiers malveillant souhaitant compromettre le système.

Ces deux obstacles expliquent pourquoi les solutions existantes aujourd'hui ne procèdent pas dans ce sens mais procèdent plutôt à une vérification du contenu soit avant leur exécution, soit via une simple somme d'intégrité et un certificat associé.

Pourtant, les solutions à ces deux obstacles, comme présentées par l'invention, permettent d'ajouter des fonctionnalités avancées au système. Par exemple, le fait que suivant le niveau d'intégrité constaté, l'élément sécurisé ne soit pas réduit au choix binaire de délivrer ou de non délivrer le service, mais à un gradient de fonctionnalités.

Ainsi, il existe le problème général de permettre à un utilisateur de contrôler l'intégrité d'un dispositif de validation des transactions, à savoir l'intégrité d'un couple carte à puce / terminal de paiement (tenant compte de l'hétérogénéité du parc de ceux-ci) et le problème particulier de surmonter les deux obstacles qui viennent d'être énoncés.

L'invention vise à apporter une solution à ces problèmes en tirant partie de l'élément sécurisé. Ainsi, dans la phase ultérieure déployée du dispositif, celui-ci peut toujours mis en œuvre par l'utilisateur en toute confiance.

A cette fin, on met en œuvre dans la phase ultérieure déployée, la paire de clés clé publique / clé privée ayant été utilisées dans la phase préalable (de fabrication ou de paramétrage). Les deux phases sont donc interdépendantes.

Ci-après, un exposé de l'invention.

Selon un premier aspect, l'invention a pour objet un procédé de contrôle d'intégrité d'un dispositif électronique, notamment un système de paiement par carte, comportant au moins :
- un processeur,
- un élément sécurisé apte à stocker et gérer des données et dans lequel a été chargé une clé publique destinée à vérifier une signature électronique, et
- un moyen de stockage de données, dont le contenu a été préalablement authentifié et dont l'intégrité peut être vérifiée par la clé publique.
tel qu'une commande de contrôle d'intégrité entraîne l'exécution des étapes suivantes :
- l'élément sécurisé exécute, par l'intermédiaire du processeur, sur le contenu reçu de la mémoire du moyen de stockage de données une vérification d'authenticité, afin de vérifier grâce à la clé publique que son contenu n'a pu être modifié depuis son authentification initiale,
- lorsque la vérification d'authenticité a réussi, le dispositif est considéré comme intègre.

Le procédé est tel qu'une commande de contrôle d'intégrité entraîne l'exécution des étapes successives suivantes :
- le processeur du dispositif sollicite l'élément sécurisé,
- en réponse, l'élément sécurisé adresse, par l'intermédiaire du processeur, au moyen de stockage de données une requête en vue de se faire adresser le contenu intégral de sa mémoire,
- l'élément sécurisé exécute ensuite, ladite vérification d'authenticité.

Selon une réalisation, lorsque le dispositif est considéré comme intègre, ce dispositif est apte à fonctionner selon le comportement nominal qui lui a été attribué,

Selon une réalisation, lorsque la vérification d'authenticité ne réussit pas, le dispositif est programmé pour fonctionner selon un mode adapté tenant compte de l'échec de la vérification.

Selon une réalisation, le procédé comporte, outre les étapes exécutées à chaque fois qu'une commande de contrôle d'intégrité est adressée au dispositif, une phase préalable de paramétrage du dispositif électronique, dans lequel le contenu initial de la mémoire du moyen de stockage de données est validé grâce à un moyen d'authentification numérique tel que notamment un système de signature électronique utilisant la clé privée correspondante à la clé publique chargée dans l'élément sécurisé. En particulier, la signature électronique réalisée initialement lors de la phase préalable de fabrication ou de paramétrage du dispositif électronique est chargée soit dans le moyen de stockage de données soit dans la mémoire de l'élément sécurisé.

Selon une réalisation, une commande de contrôle d'intégrité est effectuée soit lors d'un démarrage du dispositif, soit lors d'une sollicitation de son utilisateur requérant le contrôle de son intégrité.

Selon une réalisation, après au moins un ou un nombre déterminé d'exécution des étapes de contrôle d'intégrité n'ayant pas abouti à confirmer l'intégrité de la mémoire par rapport à son état initial, l'échec de la vérification d'authenticité du contenu de la mémoire entraîne l'une ou plusieurs des modalités de fonctionnement dégradé suivantes :
- notification de l'échec de vérification d'intégrité à l'utilisateur,
- blocage d'accès aux données chargées dans l'élément sécurisé,
- blocage d'accès au dispositif électronique,
- effacement de tout ou partie des données stockées dans le dispositif électronique et les éléments qui le composent.

Selon une réalisation, l'élément sécurisé dispose en mémoire d'un intervalle de temps T de référence qui est choisi pour être inférieur au temps maximal nécessaire pour que cet élément sécurisé récupère la totalité du contenu de la mémoire à authentifier, et dans lequel, chaque commande de contrôle d'intégrité adressée au dispositif entraîne l'exécution des étapes successives suivantes :
- l'élément sécurisé adresse, par l'intermédiaire du processeur, une requête au moyen de stockage de données afin qu'elle lui adresse une ou plusieurs séquences de données extraites de sa mémoire,
- l'élément sécurisé identifie le délai qui s'écoule entre l'envoi de la requête et la réception, par l'intermédiaire du processeur, du ou des séquences demandées et le compare à l'intervalle de temps T de référence,
- si le délai écoulé est supérieur à l'intervalle T, l'élément sécurisé refuse l'authentification du contenu de mémoire du moyen de stockage de données et interrompt l'exécution des étapes suivantes du procédé de contrôle d'intégrité.

Selon une réalisation, lorsque le délai écoulé entre l'envoi de la requête par l'élément sécurisé et la réception du ou des séquences demandées est inférieur à l'intervalle T, l'élément sécurisé exécute les étapes de contrôle d'intégrité, tout en vérifiant l'intégrité des séquences reçues par rapport à l'authenticité du contenu de la mémoire qu'il doit valider.

Selon une réalisation, la fonction du processeur est assurée par un microcontrôleur.

Selon un deuxième aspect, l'invention a pour objet un dispositif électronique, notamment un terminal de paiement, comportant au moins :
- un processeur,
- un élément sécurisé apte à stocker et gérer des données et dans lequel a été chargé une clé publique destinée à vérifier une signature électronique, et
- un moyen de stockage de données, dont le contenu a été préalablement authentifié et dont l'intégrité peut être vérifiée par la clé publique,
apte et destiné à mettre en œuvre un procédé de contrôle d'intégrité tel qu'il a été précédemment décrit, en ce qu'une commande de contrôle d'intégrité entraîne l'exécution des étapes successives suivantes :
- le processeur sollicite l'élément sécurisé,
- en réponse, l'élément sécurisé adresse, par l'intermédiaire du processeur, au moyen de stockage de données une requête en vue de se faire adresser le contenu intégral de sa mémoire,
- l'élément sécurisé exécute ensuite, par l'intermédiaire du processeur, sur le contenu reçu de la mémoire du moyen de stockage de données une vérification d'authenticité, afin de vérifier grâce à la clé publique que son contenu n'a pu être modifié depuis son authentification initiale,
- lorsque la vérification d'authenticité a réussi, le dispositif est considéré comme intègre.

Plus généralement, le dispositif met en œuvre les autres étapes et/ou caractéristiques du procédé précédemment décrites.

Selon une réalisation, le dispositif comporte un microcontrôleur dont la mémoire comporte tout ou partie du moyen de stockage de données et dont le processeur assure la fonction du processeur.

Selon les cas, le dispositif comporte également l'un ou/et l'autre des moyens complémentaires suivants :
- une interface homme-machine, notamment un clavier ou un écran,
- une interface de communication avec des dispositifs numériques externes, notamment un ordinateur, un réseau de communication ou un serveur distant.

Selon un troisième aspect, l'invention a pour objet des utilisations d'un tel dispositif électronique mettant en œuvre un tel procédé de contrôle d'intégrité.

Ces utilisations sont l'authentification, le chiffrement ou l'échange sécurisé à distance, de données stockées soit à l'intérieur même du dispositif soit à distance et accessibles à travers un réseau de communication, ou encore l'exécution de transactions, notamment financières.

On décrit maintenant brièvement les figures des dessins.
La figure 1 est un schéma illustrant le dispositif électronique selon l'invention.
La figure 2 est un schéma illustrant la phase préalable de fabrication ou de paramétrage du dispositif en question.
La figure 3 est un diagramme de séquences illustrant les étapes de la phase déployée du procédé de contrôle d'intégrité du dispositif en question.

L'invention a pour objet un procédé de contrôle d'intégrité d'un dispositif électronique DE. Comme indiqué, le dispositif électronique DE sera parfois dénommé par ellipse « dispositif ». Elle a aussi pour objet un dispositif électronique DE apte et destiné à mettre en œuvre ce procédé de contrôle d'intégrité.

Elle a également pour objet des utilisations du dispositif électronique DE en ce qu'il met en œuvre le procédé de contrôle d'intégrité.

Le dispositif DE peut être un système de paiement par carte, c'est-à-dire la combinaison fonctionnelle d'un terminal de paiement et d'une carte à puce bancaire de paiement.

Toutefois, cet exemple et cette application ne sont pas exclusifs d'autres.

De façon connue, un dispositif DE comporte au moins :
- un processeur MPU,
- un élément sécurisé SE, apte à stocker et gérer des données et dans lequel a été chargé une clé publique KP destinée à vérifier une signature électronique, et
- un moyen de stockage de données MEM, dont le contenu a été préalablement authentifié et dont l'intégrité peut être vérifiée par la clé publique KP. Ce moyen de stockage de données MEM comprend tout ou partie de la mémoire interne d'un microcontrôleur.

Le dispositif DE peut comporter également une interface homme-machine, notamment un clavier ou un écran. Il peut comporter également une interface de communication avec des dispositifs numériques externes, notamment un ordinateur, un réseau de communication ou un serveur distant.

Le dispositif DE peut se présenter sous la forme d'un boîtier plat et peu épais, de quelques centimètres de côté ou bien sous la forme d'une clé USB.

Un tel dispositif DE peut, moyennant la mise en œuvre du procédé de contrôle d'intégrité, être mis en œuvre pour des fonctions de sécurité, telles que notamment l'authentification, le chiffrement ou l'échange sécurisé à distance, de données stockées soit à l'intérieur même du dispositif DE soit à distance et accessibles à travers un réseau de communication. Le dispositif DE peut donc être mis en œuvre de façon autonome, ou moyennant une communication avec d'autres moyens électroniques. Une utilisation typique du dispositif DE est l'exécution de transactions, notamment financières et y compris pour des cryptomonnaies, de façon sécurisée.

Dans le contexte de l'invention, on entend par « contrôle d'intégrité » la vérification que les données n'ont pas été modifiées ou détruites de façon non autorisée conformément à la définition donnée par la norme Iso n° 7498-2.

Dans une phase préalable de fabrication ou de paramétrage FAB du dispositif DE, ses éléments constitutifs sont authentifiés par une autorité ad hoc, gouvernementale ou privée. Le dispositif DE est ainsi paramétré pour la mise en œuvre du procédé, grâce à cette authentification initiale.

Dans une phase ultérieure déployée USE, il est mis en œuvre le procédé de contrôle d'intégrité de l'invention.

On décrit maintenant plusieurs modes possibles de réalisation de l'invention.

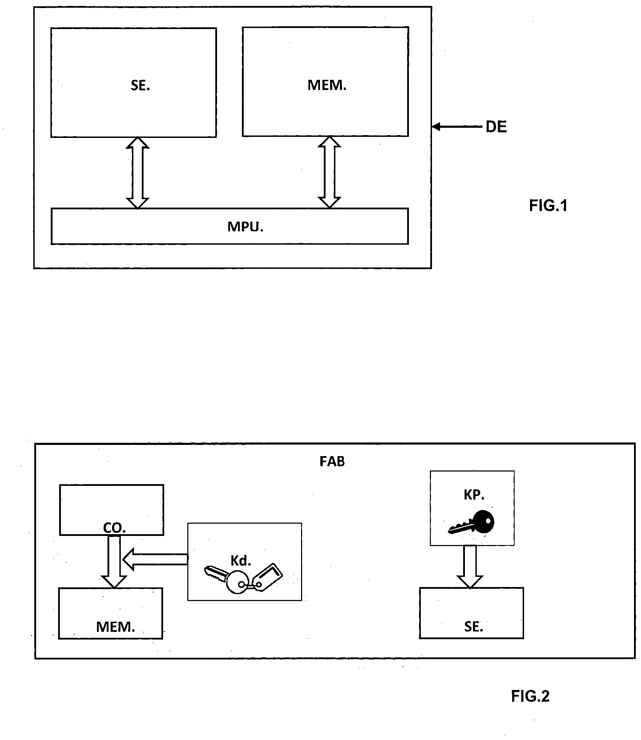

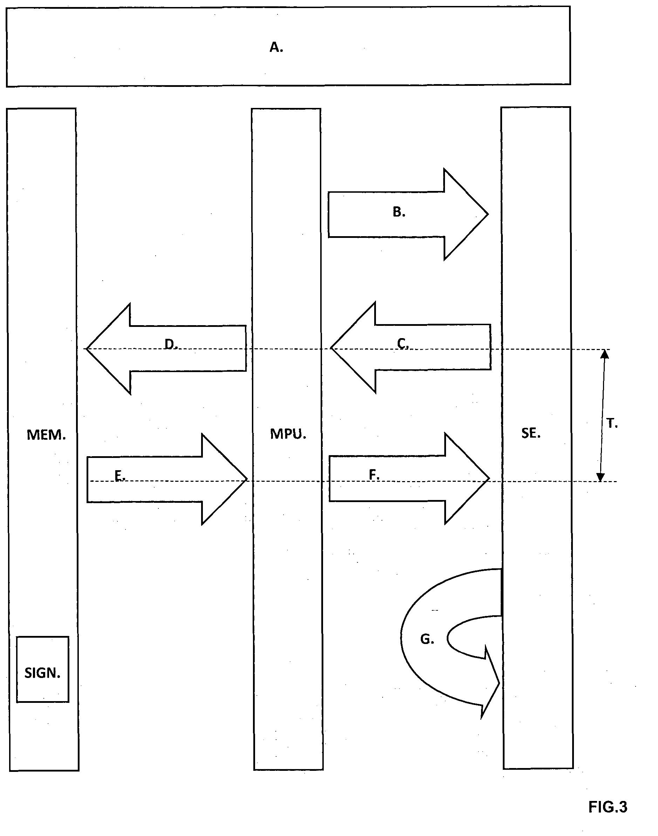

On décrit maintenant plus spécialement la phase préalable de fabrication ou de paramétrage FAB du dispositif DE, en référence à la figure 2. Cette phase intervient au moment même de la fabrication physique du dispositif DE, ou bien ultérieurement, mais avant la phase ultérieure déployée USE. Cette transition de la phase préalable de fabrication ou de paramétrage FAB vers la phase déployée USE est définitive. Dans cette phase préalable de paramétrage du dispositif électronique, le contenu initial CO de la mémoire du moyen de stockage de données MEM est validé grâce à un moyen d'authentification numérique tel que notamment un système de signature électronique utilisant la clé privée Kd correspondant à la clé publique KP chargée dans l'élément sécurisé SE. Selon les cas, la signature électronique SIGN est chargée soit dans le moyen de stockage de données MEM (comme illustré par la figure 3), soit dans la mémoire de l'élément sécurisé SE.

On décrit maintenant plus spécialement le procédé de contrôle d'intégrité du dispositif électronique DE dans la phase ultérieure déployée USE en référence à la figure 3. Ce procédé de contrôle d'intégrité est tel qu'une commande de contrôle d'intégrité A entraîne l'exécution des étapes et opérations successives décrites ci-après (chaque étape est illustrée sur la figure 3 par une flèche comportant une référence qui identifie l'étape).

D'abord, le processeur MPU du dispositif sollicite l'élément sécurisé SE (flèche B).

En réponse, l'élément sécurisé SE adresse, par l'intermédiaire du processeur MPU (flèche C), au moyen de stockage de données MEM une requête (flèche D) en vue de se faire adresser le contenu intégral de sa mémoire flèche E.

L'invention présente les avantages de permettre un contrôle complet et sans compromission des mémoires des divers microprocesseurs du système.

L'élément sécurisé doit déléguer au processeur MPU des opérations d'affichage et d'interaction utilisateur, et pour cela, il a besoin du concours d'un code validé s'exécutant sur le processeur MPU. Dès lors, le processeur MPU doit exécuter un code intègre afin d'éviter à l'utilisateur une inadéquation entre les informations affichées et réellement manipulées par l'élément sécurisé SE.

Grace au fait que l'entièreté de la mémoire du processeur MPU collaborant avec l'élément sécurisé SE est contrôlée, l'effet de sécurité est total, le processeur MPU n'ayant pas de marge de manœuvre pour opérer des procédures non intègres, et le niveau de fonctionnalité de l'élément sécurisé SE est adapté.

L'élément sécurisé SE peut par exemple, décider d'un ensemble de niveau de sécurité suivant :
- complet : la mémoire du processeur MPU est reconnue intègre et les contremesures pour détecter un processeur MPU falsifié n'ont pas de résultats positifs.
- partiel (fonction d'authentification uniquement) : la mémoire du processeur MPU est reconnue intègre, mais certaines contremesures de détection d'un processeur MPU falsifié ont des résultats positifs, l'élément sécurisé SE n'acceptera que des requetés d'authentification de contenu via les secrets de l'utilisateur, mais rejettera toute autre demande.
- nul : la mémoire du processeur MPU n'est pas reconnue comme intègre. Dans ce cas, l'élément sécurisé SE n'accèdera à aucune demande faisant appel aux secrets de l'utilisateur, mais autorisera néanmoins la réalisation d'autres opérations cryptographique (importation de secrets externes, manipulation de ceux-ci). Dans ce cas, optionnellement, l'élément sécurisé SE peut décider d'effacer les secrets de l'utilisateur pour plus de confidentialité.

De ces niveaux de sécurité, il apparaît que l'élément sécurisé SE n'est pas seulement asservi par le système qui lui soumet des requêtes, mais peut décider, en fonction de celles-ci, des réponses à ses propres requêtes au système et du niveau de fonctionnalités qu'il sera en mesure de délivrer.

Ensuite l'élément sécurisé SE exécute sur le contenu reçu (flèche F) de la mémoire du moyen de stockage de données MEM une vérification d'authenticité (flèche G), afin de vérifier grâce à la clé publique KP que son contenu n'a pu être modifié depuis son authentification initiale.

Lorsque la vérification d'authenticité a réussi, le dispositif DE est considéré comme intègre.

Selon les cas, en fonction des capacités des éléments constitutifs du dispositif DE, les étapes et opérations correspondant aux flèches C, D, E et F portent soit sur l'entier contenu de la mémoire du moyen de stockage de données MEM soit sur des parties de ce contenu, auquel cas ces étapes et opérations correspondant aux flèches C, D, E et F sont répétées jusqu'à ce que l'entier contenu ait été reçu par l'élément sécurisé SE, afin qu'il puisse alors exécuter la vérification d'intégrité (flèche G).

Selon les cas, une commande de contrôle d'intégrité A est effectuée soit lors d'un démarrage du dispositif DE, soit lors d'une sollicitation de son utilisateur requérant le contrôle de son intégrité.

Lorsque le dispositif DE est considéré comme intègre, il est apte à fonctionner selon le comportement nominal qui lui a été attribué.

Lorsque, en revanche, la vérification d'authenticité ne réussit pas, le dispositif DE est programmé pour fonctionner selon un mode adapté tenant compte de l'échec de la vérification. Un tel mode adapté peut, par exemple, comprendre un processus d'alerte de l'utilisateur impliquant une action positive de sa part de poursuivre malgré tout la mise en œuvre du dispositif DE ou bien au contraire de ne pas la poursuivre.

Dans une réalisation, il est prévu qu'après au moins un, ou un nombre déterminé d'exécution des étapes de contrôle d'intégrité n'ayant pas abouti à confirmer l'intégrité de la mémoire du moyen de stockage de données MEM par rapport à son état initial, l'échec de la vérification d'authenticité du contenu de la mémoire du moyen de stockage de données MEM entraîne l'une ou plusieurs des modalités de fonctionnement dégradé suivantes :
- notification de l'échec de vérification d'intégrité à l'utilisateur,
- blocage d'accès aux données chargées dans l'élément sécurisé SE,
- blocage d'accès au dispositif DE,
- effacement de tout ou partie des données stockées dans le dispositif DE et les éléments qui le composent.

Dans une réalisation (voir figure 3), il est prévu que l'élément sécurisé SE dispose en mémoire d'un intervalle de temps T de référence qui est choisi pour être inférieur au temps maximal nécessaire pour l'exécution d'une séquence des étapes correspondant aux flèches C, D, E et F, et dans lequel, chaque commande de contrôle d'intégrité adressée au dispositif DE entraîne l'exécution des étapes successives suivantes :
- l'élément sécurisé SE adresse, par l'intermédiaire du processeur MPU, une requête au moyen de stockage de données MEM afin qu'il lui adresse une ou plusieurs séquences de données extraites de sa mémoire,
- l'élément sécurisé SE identifie le délai qui s'écoule entre l'envoi de la requête et la réception, par l'intermédiaire du processeur (MPU), du ou des séquences demandées et le compare à l'intervalle de temps T de référence,
- si le délai écoulé est supérieur à l'intervalle T, l'élément sécurisé SE refuse l'authentification du contenu de mémoire du moyen de stockage de données MEM et interrompt l'exécution des étapes suivantes du procédé de contrôle d'intégrité.

Lorsque le délai écoulé entre l'envoi de la requête par l'élément sécurisé SE et la réception de la ou des séquences demandées est inférieur à l'intervalle T, l'élément sécurisé SE exécute les étapes du procédé de contrôle d'intégrité, tout en vérifiant l'intégrité des séquences reçues par rapport à l'authenticité du coritenu de la mémoire qu'il doit valider.

## Revendications

1. Procédé de contrôle d'intégrité d'un dispositif électronique (DE), le dispositif électronique comprenant:
- un élément sécurisé (SE) apte à stocker et gérer des données et dans lequel a été chargé une clé publique (KP) destinée à vérifier une signature électronique,
- un processeur (MPU) configuré pour collaborer avec l'élément sécurisé, et
- un moyen de stockage de données (MEM) comprenant une mémoire dont le contenu intégral a été préalablement authentifié au cours d'une étape d'authentification initiale et dont l'intégrité peut être vérifiée au moyen de la clé publique, la mémoire comprenant un code exécutable par le processeur,
le procédé de contrôle comprenant les étapes suivantes : en
réponse à une sollicitation (B) du processeur, l'élément sécurisé (SE) exécute, sur le contenu de la mémoire du moyen de stockage de données (MEM) reçu par l'intermédiaire du processeur (MPU), une étape de vérification de l'authenticité du contenu intégral de la mémoire, afin de vérifier grâce à la clé publique (KP) que son contenu n'a pas été modifié depuis son authentification initiale, le dispositif étant considéré comme intègre par l'élément sécurisé lorsque la vérification d'authenticité a réussi, le procédé étant **caractérisé en ce que** :
- l'élément sécurisé dispose en mémoire d'un intervalle de temps T de référence qui est choisi pour être inférieur au temps maximal nécessaire pour que l'élément sécurisé récupère par l'intermédiaire du processeur la totalité du contenu de la mémoire à authentifier, et dans lequel l'étape de vérification de l'authenticité de la mémoire comprend les étapes successives suivantes qui sont répétées par l'élément sécurisé jusqu'à ce que l'entier contenu de la mémoire ait été reçu :
- l'élément sécurisé adresse au moyen de stockage de données, par l'intermédiaire (C) du processeur, une requête (D) en vue de recevoir une ou plusieurs séquences de données (E) extraites de sa mémoire,
- l'élément sécurisé identifie le délai qui s'écoule entre l'envoi de la requête et la réception du ou des séquences demandées et le compare à l'intervalle de temps T de référence, et
- si le délai écoulé est supérieur à l'intervalle T, l'élément sécurisé refuse l'authentification du contenu de mémoire du moyen de stockage de données et interrompt l'exécution des étapes suivantes du procédé de contrôle d'intégrité.

2. Procédé selon la revendication 1, dans lequel lorsque le dispositif est considéré comme intègre, l'élément sécurisé est apte à fonctionner selon le comportement nominal qui lui a été attribué.

3. Procédé selon l'une des revendications 1 et 2, dans lequel lorsque la vérification d'authenticité ne réussit pas, l'élément sécurisé est programmé pour fonctionner selon un mode adapté tenant compte de l'échec de la vérification.

4. Procédé selon l'une des revendications 1 à 3, comprenant une phase préalable de paramétrage du dispositif électronique, dans lequel le contenu initial de la mémoire du moyen de stockage de données est validé grâce à une signature électronique (SIGN) utilisant une clé privée (Kd) correspondant à la clé publique (KP) chargée dans l'élément sécurisé.

5. Procédé selon la revendication 4, dans lequel la signature électronique (SIGN) réalisée initialement lors de la phase préalable de paramétrage du dispositif électronique est chargée soit dans le moyen de stockage de données, soit dans une mémoire de l'élément sécurisé.

6. Procédé selon l'une des revendications 1 à 5, dans lequel le contrôle d'intégrité est effectué soit lors d'un démarrage du dispositif, soit lors d'une sollicitation de son utilisateur requérant le contrôle de son intégrité.

7. Procédé selon l'une des revendications 1 à 6, dans lequel après au moins un ou un nombre déterminé d'exécution des étapes de contrôle d'intégrité n'ayant pas abouti à confirmer l'intégrité de la mémoire par rapport à son état initial, l'échec de la vérification d'authenticité du contenu de la mémoire entraîne l'une ou plusieurs des modalités de fonctionnement dégradé suivantes :
- notification de l'échec de vérification d'intégrité à l'utilisateur,
- blocage d'accès aux données chargées dans l'élément sécurisé,
- blocage d'accès au dispositif électronique,
- effacement de tout ou partie des données stockées dans le dispositif électronique et les éléments qui le composent.

8. Procédé selon l'une des revendications 1 à 7, dans lequel lorsque le délai écoulé entre l'envoi par l'élément sécurisé de la requête en vue de se faire adresser une ou plusieurs séquences de données et la réception de la ou des séquences demandées est inférieur à l'intervalle T, l'élément sécurisé exécute les étapes du procédé de contrôle d'intégrité tout en vérifiant l'intégrité des séquences reçues par rapport à l'authenticité du contenu de la mémoire qu'il doit valider.

9. Procédé selon l'une des revendications 1 à 8, dans lequel le processeur (MPU) est un microcontrôleur et dans lequel la mémoire du moyen de stockage de données est une mémoire du microcontrôleur.

10. Procédé selon l'une des revendications 1 à 9, dans lequel le dispositif électronique prend la forme d'un boîtier plat et peu épais, et est configuré pour l'exécution de transactions financières concernant des cryptomonnaies.

11. Dispositif électronique (DE), comprenant :
- un élément sécurisé (SE) apte à stocker et gérer des données et dans lequel a été chargé une clé publique (KP) destinée à vérifier une signature électronique,
- un processeur (MPU) configuré pour collaborer avec l'élément sécurisé, et
- un moyen de stockage de données (MEM) comprenant une mémoire dont le contenu intégral a été préalablement authentifié au cours d'une étape d'authentification initiale et dont l'intégrité peut être vérifiée au moyen de la clé publique, la mémoire comprenant un code exécutable par le processeur,
l'élément sécurisé (SE) étant configuré pour exécuter, en réponse à une sollicitation (B) du processeur (MPU) lors d'un démarrage du dispositif, sur le contenu de la mémoire du moyen de stockage de données (MEM) reçu par l'intermédiaire du processeur, une étape de vérification de l'authenticité du contenu intégral de la mémoire, afin de vérifier grâce à la clé publique (KP) que son contenu n'a pas été modifié depuis son authentification initiale, le dispositif étant considéré comme intègre par l'élément sécurisé lorsque la vérification d'authenticité a réussi,
le dispositif électronique (DE) étant **caractérisé en ce que** :
- l'élément sécurisé dispose en mémoire d'un intervalle de temps T de référence qui est choisi pour être inférieur au temps maximal nécessaire pour que l'élément sécurisé récupère par l'intermédiaire du processeur la totalité du contenu de la mémoire à authentifier,
- l'élément sécurisé est configuré pour exécuter les étapes successives suivantes et les répéter jusqu'à ce que l'entier contenu de la mémoire ait été reçu :
- adresser au moyen de stockage de données, par l'intermédiaire (C) du processeur, une requête (D) en vue de recevoir une ou plusieurs séquences de données (E) extraites de sa mémoire,
- identifier le délai qui s'écoule entre l'envoi de la requête et la réception du ou des séquences demandées et le compare à l'intervalle de temps T de référence, et
- si le délai écoulé est supérieur à l'intervalle T, refuser l'authentification du contenu de mémoire du moyen de stockage de données et interrompre l'exécution des étapes suivantes du contrôle de l'authenticité de la mémoire.

12. Dispositif électronique selon la revendication 11, dans lequel le processeur est un microcontrôleur et la mémoire du moyen de stockage de données est une mémoire du microcontrôleur.

13. Dispositif électronique selon l'une des revendications 11 et 12, prenant la forme d'un boîtier plat et peu épais.

14. Dispositif électronique selon l'une des revendications 11 et 12, comprenant également l'un ou/et l'autre des moyens complémentaires suivants :
- une interface homme-machine, notamment un clavier ou un écran,
- une interface de communication avec des dispositifs numériques externes, notamment un ordinateur, un réseau de communication ou un serveur distant.

15. Utilisation d'un dispositif électronique selon l'une des revendications 11 à 14 pour la mise en œuvre de fonctions de sécurité, telles que notamment l'authentification, le chiffrement ou l'échange sécurisé à distance, de données stockées soit à l'intérieur même du dispositif soit à distance et accessibles à travers un réseau de communication.

16. Utilisation d'un dispositif électronique selon l'une des revendications 11 à 14 pour l'exécution de transactions financières concernant des cryptomonnaies.

## Patentansprüche

1. Verfahren zum Überprüfen einer Integrität einer elektronischen Vorrichtung (DE), die elektronische Vorrichtung umfassend:
- ein sicheres Element (SE), das geeignet ist, um Daten zu speichern und zu verwalten, und in das ein öffentlicher Schlüssel (KP) geladen wurde, der dafür bestimmt ist, eine elektronische Signatur zu verifizieren,
- einen Prozessor (MPU), der zum Zusammenarbeiten mit dem sicheren Element konfiguriert ist, und
- ein Datenspeichermittel (MEM), umfassend einen Speicher, dessen gesamter Inhalt vorher während eines anfänglichen Authentifizierungsschritts authentifiziert wurde und dessen Integrität mittels des öffentlichen Schlüssels verifiziert werden kann, der Speicher umfassend einen Code, der durch den Prozessor ausführbar ist,
das Überprüfungsverfahren umfassend die folgenden Schritte: als Reaktion auf eine Anfrage (B) des Prozessors führt das sichere Element (SE) an dem Inhalt des Speichers des Datenspeichermittels (MEM), der über den Prozessor (MPU) empfangen wird, einen Schritt zum Verifizieren der Authentizität des gesamten Inhalts des Speichers aus, um mithilfe des öffentlichen Schlüssels (KP) zu verifizieren, dass sein Inhalt seit seiner anfänglichen Authentifizierung nicht geändert wurde, wobei die Vorrichtung durch das sichere Element als integer betrachtet wird, wenn die Authentizitätsverifizierung erfolgreich war, wobei das Verfahren **dadurch gekennzeichnet ist, dass:**
- das sichere Element in dem Speicher über ein Referenzzeitintervall T verfügt, das gewählt ist, um kürzer als die maximale Zeit zu sein, die nötig ist, damit das sichere Element über den Prozessor den ganzen zu authentifizierenden Inhalt des Speichers wiedergewinnt, und wobei der Schritt des Verifizierens der Authentizität des Speichers die folgenden aufeinanderfolgenden Schritte umfasst, die durch das sichere Element wiederholt werden, bis der vollständige Inhalt des Speichers empfangen wurde:
- das sichere Element schickt über (C) den Prozessor eine Forderung (D) an das Datenspeichermittel, mit dem Ziel, eine oder mehrere Datensequenzen (E) zu erhalten, die aus seinem Speicher extrahiert werden,
- das sichere Element identifiziert die Zeitverzögerung, die zwischen dem Senden der Forderung und dem Empfangen der verlangten Sequenz(en) verstreicht und vergleicht sie mit dem Referenzzeitintervall T, und
- falls die verstrichene Zeitverzögerung größer als das Intervall T ist, verweigert das sichere Element die Authentifizierung des Speicherinhalts des Datenspeichermittels und unterbricht die Ausführung der folgenden Schritte des Integritätsüberprüfungsverfahrens.

2. Verfahren nach Anspruch 1, wobei, wenn die Vorrichtung als integer betrachtet wird, das sichere Element geeignet ist, um gemäß dem nominalen Verhalten zu arbeiten, das ihm zugewiesen wurde.

3. Verfahren nach einem der Ansprüche 1 und 2, wobei, wenn die Authentizitätsverifizierung nicht erfolgreich ist, das sichere Element zum Arbeiten gemäß einem Modus programmiert ist, der das Fehlschlagen der Verifizierung berücksichtigt.

4. Verfahren nach einem der Ansprüche 1 bis 3, umfassend eine vorherige Phase zum Parametrieren der elektronischen Vorrichtung, wobei der anfängliche Inhalt des Speichers des Datenspeichermittels mithilfe einer elektronischen Signatur (SIGN) validiert wird, die einen privaten Schlüssel (Kd) nutzt, der dem öffentlichen Schlüssel (KP) entspricht, der in das sichere Element geladen ist.

5. Verfahren nach Anspruch 4, wobei die elektronische Signatur (SIGN), die anfänglich während der vorherigen Phase zum Parametrieren der elektronischen Vorrichtung erstellt wird, entweder in das Datenspeichermittel oder in einen Speicher des sicheren Elements geladen wird.

6. Verfahren nach einem der Ansprüche 1 bis 5, wobei die Integritätsüberprüfung entweder bei einem Starten der Vorrichtung oder auf Anfrage seines Benutzers erfolgt, der die Überprüfung seiner Integrität fordert.

7. Verfahren nach einem der Ansprüche 1 bis 6, wobei, nachdem mindestens eine oder eine bestimmte Anzahl von Ausführungen der Integritätsüberprüfungsschritte nicht zu einem Bestätigen der Integrität des Speichers in Bezug auf seinen anfänglichen Zustand geführt hat, das Fehlschlagen der Verifizierung der Authentizität des Inhalts des Speichers einen oder mehrere der folgenden verschlechterten Betriebsmodi verursacht:
- Benachrichtigen des Benutzers über das Fehlschlagen der Integritätsverifizierung,
- Sperren des Zugangs zu Daten, die in das sichere Element geladen sind,
- Sperren des Zugangs zu der elektronischen Vorrichtung,
- Löschen aller oder eines Teils der Daten, die auf der elektronischen Vorrichtung gespeichert sind, und der Elemente, aus denen sie besteht.

8. Verfahren nach einem der Ansprüche 1 bis 7, wobei, wenn die Zeitverzögerung, die zwischen dem Senden durch das sichere Element der Forderung mit dem Ziel, sich eine oder mehrere Datensequenzen schicken zu lassen, und dem Empfangen der verlangten Sequenz(en) verstrichen ist, kleiner als das Intervall T ist, das sichere Element die Schritte des Integritätsüberprüfungsverfahrens ausführt, wobei gleichzeitig die Integrität der empfangenen Sequenzen in Bezug auf die Authentizität des Inhalts des Speichers verifiziert wird, den es validieren muss.

9. Verfahren nach einem der Ansprüche 1 bis 8, wobei der Prozessor (MPU) ein Mikrocontroller ist und wobei der Speicher des Datenspeichermittels ein Speicher des Mikrocontrollers ist.

10. Verfahren nach einem der Ansprüche 1 bis 9, wobei die elektronische Vorrichtung die Form eines flachen und dünnschichtigen Gehäuses hat und zum Ausführen von Finanztransaktionen im Zusammenhang mit Kryptowährungen konfiguriert ist.

11. Elektronische Vorrichtung (DE), umfassend:
- ein sicheres Element (SE), das geeignet ist, um Daten zu speichern und zu verwalten, und in das ein öffentlicher Schlüssel (KP) geladen wurde, der dafür bestimmt ist, eine elektronische Signatur zu verifizieren,
- einen Prozessor (MPU), der zum Zusammenarbeiten mit dem sicheren Element konfiguriert ist, und
- ein Datenspeichermittel (MEM), umfassend einen Speicher, dessen gesamter Inhalt vorher während eines anfänglichen Authentifizierungsschritts authentifiziert wurde und dessen Integrität mittels des öffentlichen Schlüssels verifiziert werden kann, der Speicher umfassend einen Code, der durch den Prozessor ausführbar ist, wobei das sichere Element (SE) zum Ausführen, als Reaktion auf eine Anfrage (B) des Prozessors (MPU) während eines Startens der Vorrichtung, an dem Inhalt des Speichers des Datenspeichermittels (MEM), der über den Prozessor empfangen wird, eines Schritts zum Verifizieren der Authentizität des gesamten Inhalts des Speichers konfiguriert ist, um mithilfe des öffentlichen Schlüssels (KP) zu verifizieren, dass sein Inhalt seit seiner anfänglichen Authentifizierung nicht geändert wurde, wobei die Vorrichtung durch das sichere Element als integer betrachtet wird, wenn die Authentizitätsverifizierung erfolgreich war, wobei die elektronische Vorrichtung (DE) **dadurch gekennzeichnet ist, dass:**
- das sichere Element in dem Speicher über ein Referenzzeitintervall T verfügt, das gewählt ist, um kürzer als die maximale Zeit zu sein, die nötig ist, damit das sichere Element über den Prozessor den ganzen zu authentifizierenden Inhalt des Speichers wiedergewinnt,
- das sichere Element zum Ausführen der folgenden aufeinanderfolgenden Schritte und Wiederholen davon konfiguriert ist, bis der vollständige Inhalt des Speichers empfangen wurde:
- Schicken an das Datenspeichermittel über (C) den Prozessor einer Forderung (D) mit dem Ziel, eine oder mehrere Datensequenzen (E) zu erhalten, die aus seinem Speicher extrahiert werden,
- Identifizieren der Zeitverzögerung, die zwischen dem Senden der Forderung und dem Empfangen der verlangten Sequenz(en) verstreicht und Vergleichen davon mit dem Referenzzeitintervall T, und
- falls die verstrichene Zeitverzögerung größer als das Intervall T ist, Verweigern der Authentifizierung des Speicherinhalts des Datenspeichermittels und Unterbrechen der Ausführung der folgenden Schritte der Authentizitätsüberprüfung des Speichers.

12. Elektronische Vorrichtung nach Anspruch 11, wobei der Prozessor ein Mikrocontroller ist und der Speicher des Datenspeichermittels ein Speicher des Mikrocontrollers ist.

13. Elektronische Vorrichtung nach einem der Ansprüche 11 und 12, die die Form eines flachen und dünnschichtigen Gehäuses hat.

14. Elektronische Vorrichtung nach einem der Ansprüche 11 und 12, umfassend ferner eines oder/und das andere der folgenden ergänzenden Mittel:
- eine Mensch-Maschine-Schnittstelle, insbesondere eine Tastatur oder ein Bildschirm,
- eine Schnittstelle zum Kommunizieren mit externen digitalen Vorrichtungen, insbesondere einem Computer, einem Kommunikationsnetzwerk oder einem entfernten Server.

15. Nutzung einer elektronischen Vorrichtung nach einem der Ansprüche 11 bis 14 zum Implementieren von Sicherheitsfunktionen, wie insbesondere der Authentifizierung, der Verschlüsselung oder des sicheren Fernaustauschs von Daten, die entweder innerhalb der Vorrichtung selbst oder entfernt gespeichert und durch ein Kommunikationsnetzwerk zugänglich sind.

16. Nutzung einer elektronischen Vorrichtung nach einem der Ansprüche 11 bis 14 für die Ausführung von Finanztransaktionen im Zusammenhang mit Kryptowährungen.

## Claims

1. A method for checking the integrity of an electronic device (DE), the electronic device comprising:
- a secure element (SE), capable of storing and managing data and onto which a public key (KP) has been loaded, intended for verifying an electronic signature,
- a processor (MPU) configured to collaborate with the secure element, and
- a means of storing data (MEM) comprising a memory whose entire content has been previously authenticated during an initial authentication step and the integrity of which can be verified by means of the public key, the memory comprising code executable by the processor,
wherein the checking method comprises: in response to a request (B) from the processor, the secure element (SE) performs, on the content of the memory of the data storage means (MEM) received via the processor (MPU), an authentication check step of the entire memory content, in order to verify using the public key (KP) that its content has not been modified since its initial authentication, the device being considered to be integral by the secure element when the authentication check has been successful,
wherein the method is **characterised in that**:
the secure element has in memory a reference time interval T which is chosen to be less than the maximum time required for the secure element to retrieve via the processor the entire content of the memory to be authenticated, and wherein the authentication check step of the memory comprises the following successive steps which are repeated by the secure element until the entire content of the memory has been received:
- the secure element addresses to the data storage means (MEM), via (C) the processor, a request (D) to receive one or more sequences of data (E) extracted from its memory,
- the secure element identifies the time which elapses between sending the request and receipt of the sequence or sequences requested, and compares this with the reference time interval T, and
- if the elapsed time is greater than interval T, the secure element refuses to authenticate the memory content of the data storage means and interrupts execution of the subsequent steps of the integrity check procedure.

2. The method for checking the integrity of an electronic device according to claim 1, wherein, when the device is considered to be integral, the secure element is able to operate according to the nominal behaviour which has been attributed to it.

3. The method for checking the integrity of an electronic device according to one of claims 1 and 2, in which when the authentication check fails, the secure element is programmed to operate in a suitable mode taking into account the failure of the verification.

4. The method according to one of claims 1 to 3, comprising a preliminary phase for the configuration of the electronic device, in which the initial content of the memory of the data storage means is validated using an electronic signature (SIGN) using a private key (Kd) corresponding to the public key (KP) loaded on the secure element.

5. The method for checking the integrity of an electronic device according to claim 4, in which the electronic signature (SIGN) initially produced during the preliminary configuration phase of the electronic device is loaded either into the data storage means, or into a memory of the secure element.

6. The method for checking the integrity of an electronic device according to one of claims 1 to 5, in which the integrity check is performed either when the device is started or when it receives a request from the user for an integrity check.

7. The method according to one of claims 1 to 6, wherein, after at least one, but a determined number of executions of the integrity control steps do not result in confirmation of the integrity of the memory with respect to its initial state, the failure of the authentication check on the content of the memory leads to the use of one or more of the following degraded operating modes:
- notification of the failure of the integrity check to the user,
- blocking access to the data loaded on the secure element,
- blocking access to the electronic device,
- erasing all or part of the data stored in the electronic device and the elements that comprise it.

8. The method according to one of claims 1 to 7, in which, when the time elapsed between the sending by the secure element of the request to receive one or more sequences of data and the receipt of the requested sequence or sequences is less than interval T, the secure element executes the steps of the integrity check method, while verifying the integrity of the sequences received with respect to the authenticity of the content of the memory which it must validate.

9. The method according to one of claims 1 to 8, in which the processor (MPU) is a microcontroller and in which the memory of the data storage means is a memory of the microcontroller.

10. The method according to one of claims 1 to 9, in which the electronic device has the form of a flat and thin housing, and is configured for the execution of financial transactions concerning cryptocurrencies.

11. An electronic device (DE), comprising:
- a secure element (SE) capable of storing and managing data and into which a public key (KP) intended to verify an electronic signature has been loaded,
- a processor (MPU) configured to collaborate with the secure element, and
- a means of data storage (MEM) comprising a memory whose entire content has been previously authenticated during an initial authentication step and the integrity of which can be verified by means of the public key, the memory comprising code executable by the processor,
wherein the secure element (SE) is configured to execute, in response to a request (B) from the processor (MPU) during a device boot, on the content of the memory of the data storage means received via the processor, an authentication check step of the entire memory content, in order to verify using the public key (KP) that its content has not been modified since its initial authentication, the device being considered to be integral by the secure element when the authentication check has been successful,
wherein the electronic device (DE) is **characterised in that**:
- the secure element stores in memory a reference time interval T which is chosen to be less than the maximum time required for the secure element to retrieve via the processor the entire content of the memory to be authenticated,
- the secure element is configured to execute the following successive steps and to repeat them until the entire content of the memory has been received:
- address to the data storage means, via (C) the processor, a request (D) to receive one or more sequences of data (E) extracted from its memory,
- identify the time which elapses between sending the request and receipt of the sequence or sequences requested, and compare this with the reference time interval T, and
- if the elapsed time is greater than interval T, refuse authentication of the content of memory of the data storage means and interrupt execution of the subsequent steps of the authentication check of the memory.

12. The electronic device according to claim 11, in which the processor is a microcontroller and the memory of the data storage means is a memory of the microcontroller.

13. The electronic device according to one of claims 11 and 12, having the form of a flat and thin housing.

14. The electronic device according to one of claims 11 and 12, comprising also one and/or the other of the following complementary means:
- a human/machine interface, in particular a keyboard or screen,
- a communication interface with external digital devices, in particular a computer, a communication network or a remote server.

15. A use of an electronic device according to one of claims 11 to 14, for the implementation of security functions, such as, in particular, the authentication, encryption or secure remote exchange of data stored either inside the device itself, or remotely when accessible via a communication network.

16. A use of an electronic device according to one of claims 11 to 14, for the execution of financial transactions concerning cryptocurrencies.
